# EUROPÄISCHE PATENTSCHRIFT

(11) **EP 0 386 296 B1**
(45) Veröffentlichungstag und Bekanntmachung des Hinweises auf die Patenterteilung: **01.06.1994**
(21) Anmeldenummer: 89104192.3
(22) Anmeldetag: 09.03.1989
(51) Int. Cl.: G06F 15/78

(54) **Zusammensetzung eines Mikrokontrollers**
Assembly of a microcontroller
Assemblage d'un microcontrôleur

(43) Veröffentlichungstag der Anmeldung: 12.09.1990
(73) Patentinhaber: SIEMENS AKTIENGESELLSCHAFT, 80333 München (DE)
(72) Erfinder: Storandt, Steffen, Dipl.-Ing., D-8012 Riemerling (DE); Lenninger, Ralf, Dipl.-Wirtsch.-Ing., D-8400 Regensburg (DE)

(56) Entgegenhaltungen:
- INTEL DATA-SHEET, Nr. 210393-004, Oktober 1987; "UPItm-41,42: 8041AH/8042AH/8741AH/8742AH universal peripheral interface 8-bit slave microcontroller"
- ELECTRICAL DESIGN NEWS, Band 26, Nr. 14, 22. Juli 1981, Seite 212-224, Boston, Mass., US; A. SANTONI: "Instruments"
- IBM TECHNICAL DISCLOSURE BULLETIN, Band 24, Nr. 6, November 1981, Seite 2952, New York, US; S.E. GREER et al.: "Top surface divider for modules"
- ELEKTRONIK, Band 25, 1987, Seiten 84-88; K. BRAND: "Einchipcomputer und deren Entwicklung"

## Beschreibung

Die Erfindung betrifft eine Schaltungsanordnung zum Nachbilden eines Mikrokontrollers mit Anschlußklemmen und einem Bond-out-Chip des Mikrokontrollers sowie einer damit in Verbindung stehenden und umprogrammierbaren Speichereinrichtung.

Mikrokontroller sind heute allgemein bekannt und als hochintegrierte Bausteine besonders für Steuerungsaufgaben, wie z. B. im Anti-Blockiersystem bei Kraftfahrzeugbremsen, einsetzbar. Bei diesen Mitrokontrollern sind auf einem einzigen Chip im allgemeinen ein Mikroprozessor, Ports, Datenspeicher, Programmspeicher und evtl. auch andere Sonderfunktionen integriert. Einer der bekanntesten Mikrokontroller, auch Einchipcomputer genannt, ist z. B. der Typ 8051.

Dem Anwender stehen heute maskenprogrammierte Mikrokontroller, sog. ROM-Versionen, zur Verfügung. Darunter versteht man in MOS-Technologie hergestellte Mikrokontroller mit internen ROM als Speichereinrichtung. Diese Version ist jedoch nur für Produkte in Großserien geeignet. Bei der ROM-Version ist es dem Anwender nämlich nicht mehr möglich irgendwelche Datenänderungen im Speicher vorzunehmen, da das ROM bereits vom Hersteller maskenprogrammiert wird. Möchte der Anwender jedoch die Daten im Mikrokontroller aus irgendwelchen Gründen ändern, z. B. weil sich das Produkt in dem der Mikrokontroller eingesetzt wird, geändert hat, so ist er gezwungen beim Hersteller des Mikrokontrollers eine neue maskenprogrammierte Version in Auftrag zu geben. Das Herstellen einer neuen maskenprogrammierten Version des Mikrokontrollers ist jedoch vergleichsweise zeitaufwendig (Zeitbedarf einige Wochen bis Monate) und mit hohen Kosten verbunden. Für Prototypen und Kleinserien sind ROM-Versionen demnach nicht geeignet.

Die Hersteller derartiger Mikrokontrollerchips stellen dem Anwender jedoch, wie z. B. aus Elektronik, 1987, Heft 25, Seite 84 bis 88 bekannt, auch Mikrokontroller in EPROM-Version bzw. EEPROM-Version zur Verfügung. Diese Mikrokontroller können mit handelsüblichen EPROM-Programmiergeräten vom Anwender selbst programmiert werden. Sind Änderungen im Programm des Mikrokontrollers notwendig, so kann der Programmspeicher in dieser EPROM-Version des Mikrokontrollers mit UV-Licht gelöscht und danach erneut programmiert werden. Diese EPROM-Version bzw. EEPROM-Version des Mikrokontrollers bedarf aber im Gegensatz zu den maskenprogrammierten Mikrokontrollern einem anderen Design des Chips und einer völlig anderen Herstellungstechnologie INTEL DATA-SHEET, Nr. 210393-004, Oktober 1987; "UPItm-41,42: 8041AH/8042AH/8741AH/ 8742AH universal peripheral interface 8-bit slave microcontroller".

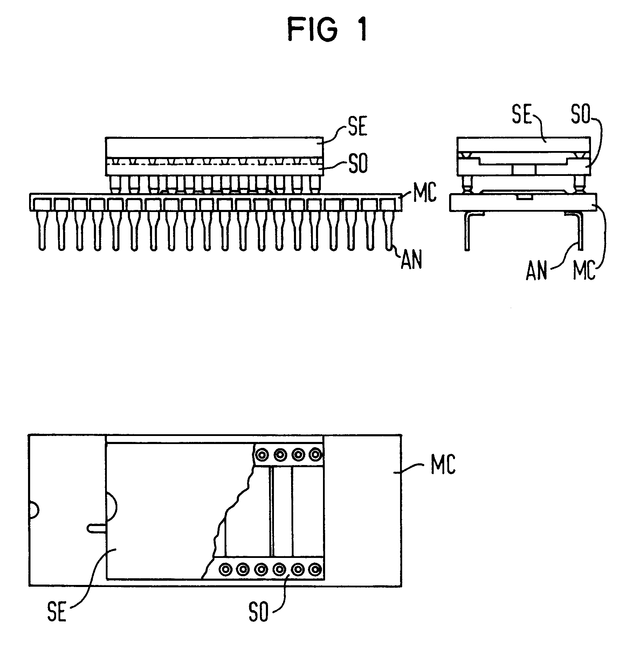

Eine andere Möglichkeit für den Anwender den Speicher eines Mikrokontrollers selbst programmieren zu können, besteht bei Mikrokontrollern der Piggyback-Version, wie diese in FIG 1 dargestellt ist. Darunter versteht man ein Mikrokontrollerchip, das "huckepack" ein extern anschließbares handelsübliches EPROM als Speichereinrichtung trägt. Der Nachteil dieser Schaltungsanordnung liegt vor allem darin, daß durch das Übereinanderliegen des Mikrokontrollerchips und des EPROM-Chips der Baustein im Vergleich zum Mikrokontroller selbst wesentlich mehr Platz in Anspruch nimmt als der Mikrokontroller selbst, und zum anderen, daß beim Programmieren das EPROM-Chip vom Mikrokontroller gelöst werden muß. Das hierfür notwendige Spezialgehäuse macht die Handhabung umständlich.

Ein anderes Entwicklungswerkzeug beim Erstellen, Austesten und Ändern von Programmen in Mikrokontrollern erhält der Anwender in Form von Bond-out-Chips. Hierunter versteht man eine Version des Mikrokontrollers, bei der die normalerweise nicht zugänglichen internen Leitungen zur Speichereinrichtung ebenfalls mit Außenanschlüssen versehen sind. Das Bond-out-Chip weist keinen internen ROM-Speicher auf, sondern enthält zusätzliche Anschlußleitungen für einen externen Speicher. Wird als externer Speicher ein EPROM oder E²PROM an das Bond-out-Chip angeschlossen, wie dies z. B. aus der Siemens-Produktinformation "SAB 80512 K, 8-Bit Single-Chip Microcontroller ROM-less-Version; Data Sheet 8.87" auf Seite 12 gezeigt ist, so steht dem Anwender ein Entwicklungswerkzeug für seine Anwenderschaltung zur Verfügung, bei dem er jederzeit sein Programm ändern kann. Als umständlich und damit störend wird es jedoch vom Anwender empfunden, daß auch hier das EPROM bzw. E²PROM-Chip zum Programmieren aus der Schaltungsanordnung entfernt werden muß. Noch nachteiliger ist, daß diese Lösung weder höhen- noch flächenmäßig mit dem nachzubildenden Mikrokontrollerbaustein identisch ist ELECTRICAL DESIGN NEWS, Band 26, Nr. 14, 22. Juli 1981, Seite 212-224, Boston, Mass., US; A. SANTONI: "Instruments".

Ausgehend von diesem bekannten Stand der Technik liegt der Erfindung die Aufgabe zugrunde, eine Schaltungsanordnung für einen in seinen Programmdaten änderbaren Mikrokontroller anzugeben, der keiner EPROM-Technologie bedarf und zudem als integrierte Schaltungsanordnung wie die bekannte ROM-Version des Mikrokontrollerbausteins in der Anwenderschaltung einsetzbar ist.

Diese Aufgabe wird durch die kennzeichnenden Merkmale des Anspruchs 1 gelöst.

Weiterbildungen der Erfindung sind Gegenstand der Unteransprüche.

Der wesentliche Vorteil der erfindungsgemäßen Schaltungsanordnung liegt vor allem darin, daß der Anwender von außen her gesehen über ein zur maskenprogrammierten Version des Mikrokontrollers identisches Chip verfügt, das in seinen Prototypen unter Betriebsbedingungen einsetzbar ist. Der Anwender kann die erfindungsgemäße Schaltungsanordnung zum Nachbilden des Mikrokontrollers direkt in seine Anwenderschaltung an dem für den Mikrokontroller vorgesehenen Anschlüssen einsetzen ohne irgendwelche Zwischenstecker oder Adapter zwischenschalten zu müssen. Der Anwender hat jederzeit die Möglichkeit seinen Programmspeicher zu ändern und zu kontrollieren. Für den Hersteller von hochintegrierten Bauelementen liegt der besondere Vorteil der erfindungsgemäßen Schaltungsanordnung gerade darin, daß es einer (E)EPROM-Version des Mikrokontrollers und der damit verbundenen eigenen (E)EPROM-Technologie für diesen jeweiligen Mikrokontroller nicht mehr bedarf.

Die Erfindung wird im folgenden anhand von drei Figuren näher erläutert. Es zeigen
- FIG 1: einen Mikrokontroller in Piggyback-Version nach dem Stand der Technik,
- FIG. 2: ein Ausführungsbeispiel einer erfindungsgemäßen Schaltungsanordnung zum Nachbilden eines Mikrokontrollers, und
- FIG 3: eine Adaptereinrichtung zum Programmieren oder Lesen der umprogrammierbaren Speichereinrichtung des Mikrokontrollers.

FIG 1 zeigt einen Mikrokontroller in Piggyback-Version, wie er z. B. unter der Bezeichnung SAB 80 315-C von Siemens erhältlich ist. Dieser Mikrokontroller MC hat ein sog. C-DIP 40-Gehäuse, wie es in FIG 1 mit seinen 40 Anschlüssen AN dargestellt ist. Durch Einsetzen in einem mit diesem Baustein festverbundenen Sockel SO läßt sich extern eine Speichereinrichtung SE, z. B. ein EPROM bzw. EEPROM, an den Mikrokontroller MC anschließen. Zur Programmierung dieses EPROM-bzw. EEPROM-Bausteines ist es notwendig, diesen aus den Sockel SO zu nehmen und in ein handelsübliches Programmiergerät zu stecken.

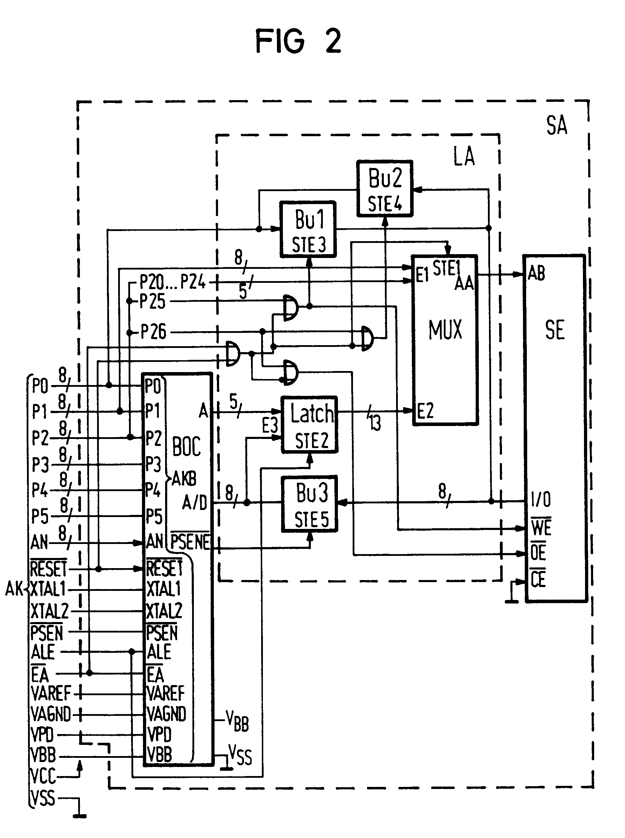

In FIG 2 ist eine erfindungsgemäße Schaltungsanordnung zum Nachbilden eines Mikrokontrollers, hier als Ausführungsbeispiel der Mikrokontroller SAB 80 515 von Siemens, dargestellt. Die Schaltungsanordnung ist durch das Bezugszeichen SA gekennzeichnet. Diese Schaltungsanordnung SA mit z. B. PLCC- oder DIP-Pinbelegung weist ein zu diesem nachzubildenden Mikrokontroller passendes und in MOS-Technologie hergestelltes Bond-out-Chip BOC, hier den Baustein von Siemens SAB 80 512 K, auf. Beschrieben ist dieses Bond-out-Chip BOC z. B. in der obengenannten Siemens-Produktinformation "SAB 80 512 K, 8-Bit Single-Chip Microcontroller ROM-less-Version; Data Sheet 8.87". Dieses Bond-out-chip BOC wird dem Anwender zur Echtzeit-Emulation in der Entwicklung bei seiner Anwenderschaltung vom Hersteller zur Verfügung gestellt. Dieses Bond-out-Chip BOC verfügt neben allen auch beim nachzubildenden Mikrokontroller vorhandenen Anschlüssen zusätzlich über Anschlußklemmen, die beim Mikrokontroller selbst nicht nach außen geführt und dadurch dem Anwender nicht zugänglich sind. Beim Bond-out-Chip BOC dieses Ausführungsbeispiels sind dies fünf Klemmen A für die reinen Adressleitungen, acht Klemmen A/D für die Adress/Datenleitungen, die allesamt zum Zugriff auf die Speichereinrichtung notwendig sind, und einer Klemme P̅S̅E̅N̅E̅, über die die in der externen Speichereinrichtung gespeicherten Programmdaten an die acht Klemmen A/D der Adress/Datenleitungen freigegeben werden. Die übrigen Anschlüsse AKB des Bond-out-Chips BOC entsprechen - wie erwähnt - den Anschlüssen der maskenprogrammierten Version des Mikrokontrollers.

Im dargestellten Beispiel weist das Bond-out-Chip BOC neben sechs Anschlüssen für Versorgungs- und Referenzspannungen V_{CC}, V_{SS}, V_{BB}, V_{PD}, V_{AGND} und V_{AREF} noch folgende Anschlußklemmen auf: sechs bidirektionale 8 Bit-Ports P0, P1, P2, P3, P4 und P5, ein 8-Bit-unidirektionales Eingangs-Port AN, eine Reset-Klemme R̅E̅S̅E̅T̅, zwei Taktanschlüsse XTAL1, XTAL2, eine Klemme P̅S̅E̅N̅ für die Programmspeicherfreigabe, eine weitere Klemme ALE sowie eine Klemme E̅A̅, die auf hohes Potential gelegt werden muß, um den Zugriff auf das interne ROM im nachzubildenden Mikrokontroller zu ermöglichen. Bei niedrigem Potential, also logischem L-Pegel, wird beim nachzubildenden Mikrokontroller der Zugriff auf das interne ROM gesperrt. Diese zuletzt genannten insgesamt 68 Anschlüsse AKB des Bond-out-Chips BOC sind auch mit Anschlußklemmen AK der erfindungsgemäßen Schaltungsanordnung SA verbunden und stellen die einzige Verbindung der Schaltungsanordnung SA mit der Außenwelt dar, wie dies durch die strichlierte Umrandung der erfindungsgemäßen Schaltungsanordnung SA in FIG 2 dargestellt ist. Diese Anschlüsse AK sind erfindungsgemäß pinkompatibel zum nachzubildenden Mikrokontroller ausgeführt. Damit wird erreicht, daß die erfindungsgemäße Schaltungsanordnung SA anstelle des Mikrokontrollers in der maskenprogrammierten Version in die dafür vorgesehene Fassung der Anwenderschaltung eingesetzt werden kann. Das Gehäuse der erfindungsgemäßen Schaltungsanordnung SA ist zweckmäßigerweise in seinen räumlichen Abmessungen gleich oder mindestens annähernd gleich der räumlichen Abmessungen des nachzubildenden Mikrokontrollers.

In Verbindung mit diesem Bond-out-Chip BOC steht eine umprogrammierbare Speichereinrichtung SE, bevorzugt ein EPROM-Speicher bzw. EEPROM-Speicher, deren gespeicherte Daten durch UV-Licht bzw. elektrisch gelöst werden können und neu programmierbar sind. Über eine Logikanordnung LA besteht über mindestens einen Teil der Anschlußklemmen AK der Schaltungsanordnung SA ein direkter Zugriff auf die Speichereinrichtung SE zum Zwecke des Programmierens oder Kontrollierens und dem damit verbundenen Auslesen der in dieser Speichereinrichtung SE gespeicherten Daten. Die Logikanordnung LA kann z. B. eine Gate-Array-Schaltungsanordnung sein. Im Ausführungsbeispiel ist die Speichereinrichtung SE durch ein 8 K 8 Bit-EEPROM, beispielsweise den Typ 28C64, realisiert. Liegt an den Anschlußklemmen E̅A̅ und R̅E̅S̅E̅T̅ Low-Pegel, also "L", so kann über einen Teil der externen Anschlußklemmen AK auf das EEPROM zugegriffen werden. Andernfalls greift das Bond-out-Chip BOC auf das EEPROM zu.

Im einzelnen besteht die Logikanordnung LA in diesem Ausführungsbeispiel aus einer Multiplexereinrichtung MUX, die einen Steuereingang STE1, dreizehn mit den Adressanschlußklemmen AB der Speichereinrichtung SE in Verbindung stehenden Ausgangsklemmen AA und zwei dreizehnpoligen Eingangsklemmen E1 und E2. Die ersten Eingangsklemmen E1 sind mit den Anschlußklemmen AK der Schaltungsanordnung SA mindestens teilweise verbunden, und zwar in diesem Ausführungsbeispiel mit dem zweiten 8-Bit-Port P1 und den ersten fünf Anschlußklemmen P20 bis P24 des dritten 8-Bit-Ports P2. Die zweiten Eingangsklemmen E2 sind mit dem Ausgang einer einen Steuereingang STE2 aufweisenden Zwischenspeichereinrichtung LATCH verbunden, die mit dreizehn Eingangsklemmen, welche mit den fünf Adressklemmen A und den acht Klemmen A/D für die Adress/Datenleitungen A/D des Bond-out-Chips BOC verbunden sind, versehen ist. Der Steuereingang STE2 dieser Zwischenspeichereinrichtung LATCH ist mit der Anschlußklemme ALE in Verbindung.

Für den Fall der Programmierung oder Kontrolle kommen die Adressen für das (E)EPROM von einem Teil der Anschlußklemmen AK, für den normalen Betrieb vom Bond-out-Chip BOC. Dies wird durch die in der Logikanordnung LA vorhandenen ODER-Gatter G1, G2, G3, G4 sichergestellt, welche bei logischem "L" an den Anschlußklemmen E̅A̅ und R̅E̅S̅E̅T̅ den Steuereingang STE1 der Multiplexereinrichtung auf Low-Pegel zieht und damit die Klemmen E1 der Multiplexereinrichtung MUX auf dessen Ausgangsklemmen AA durchschaltet.

Den Datenfluß zum bzw. vom Programmspeicher steuern drei 8-Bit-Buffer, Bu 1, Bu 2 und Bu 3.

Der erste 8-Bit-Buffer Bu 1 schaltet die an den Anschlußklemmen P0 liegenden Daten auf die I/O-Anschlußklemme der Speichereinrichtung SE. Diese Betriebsart ist für die Programmierungen notwendig und wird über die Logikanordnung LA dann eingestellt, wenn E̅A̅, R̅E̅S̅E̅T̅ und P25 einen Low-Pegel aufweisen und damit das Freigabesignal an der Steuerklemme STE3 des ersten Buffers Bu 1 gleich "L" wird. Der zweite 8-Bit-Buffer Bu 2 ist derart angeordnet, daß die auf den I/O-Leitungen befindlichen Daten der Speichereinrichtung SE auf die Anschlußklemmen P0 schaltbar sind. Diese Betriebsart dient zur Kontrolle der programmierten Daten und wird durch die Logikanordnung LA dann hervorgerufen, wenn sich die Anschlußklemmen E̅A̅, R̅E̅S̅E̅T̅ und P26 auf Low-Pegel befinden und damit das Freigabesignal an der Steuerklemme STE4 des zweiten Buffers Bu 2 = "L" ist.

Der dritte 8-Bit-Buffer Bu 3 schaltet die Daten von den I/O-Leitungen der Speichereinrichtung SE auf die Klemmen A/D der Adress/Datenleitungen des Bond-out-Chips BOC. Diese Betriebsart ist im Normalfall erforderlich. Das Freigabesignal an der Steuerklemme STE5 kommt vom Ausgang der Anschlußklemme P̅S̅E̅N̅E̅ des Bond-out-Chips BOC.

Von den Steuerleitungen für die Speichereinrichtung SE ist die Klemme C̅E̅ ständig aktiv, d. h. auf logisch "L". Das Schreibsignal an der Klemme W̅E̅ zur Programmierung der Speichereinrichtung SE wird über die Logikanordnung LA durch E̅A̅, R̅E̅S̅E̅T̅ und P25="L" aktiv. Das Lesesignal an der Klemme OE ist sowohl im Normalbetrieb als auch im Kontrollmodus aktiv.

Die Auswahl, ob die erfindungsgemäße Schaltungsanordnung SA als Mikrokontroller arbeitet oder ob die Speichereinrichtung SE programmiert werden soll, erfolgt bei der vorgestellten Schaltungsanordnung SA durch Anlegen eines logischen Pegels "H" oder "L" an die Anschlüsse E̅A̅ und R̅E̅S̅E̅T̅. Dies stellt für den Benutzer keinerlei Einschränkung dar, da nur dann auf die Speichereinrichtung SE zugegriffen werden soll, wenn die Schaltungsanordnung SA nicht als Mikrokontroller arbeitet. Liegt mindestens eine der Anschlußklemmen E̅A̅ oder R̅E̅S̅E̅T̅ auf logisch "H", so gibt das Bond-out-Chip BOC über seine Anschlußklemmen A und A/D die Adresse für den Programmspeicherzugriff gemultiplext aus. Die Zwischenspeichereinrichtung LATCH steuert durch das an der Klemme ALE anliegende Signal diese Adresse, die über den Multiplexer MUX an die Speichereinrichtung SE gelangt. Die zugehörigen Daten werden über die Buffer-einrichtung Bu 3 mit dem Signal an der Anschlußklemme PSENE eingelesen. Da die Klemme C̅E̅ ständig auf Bezugspotential gelegt ist, während W̅E̅ auf positivem Potential liegt, ist das Lesesignal der Speichereinrichtung SE aktiv und das Schreibsignal gesperrt.

Liegen dagegen die Eingangsklemmen E̅A̅ und R̅E̅S̅E̅T̅ auf logisch "L", so ist der direkte Zugriff auf das EEPROM über mindestens einen Teil der Anschlußklemmen AK der Schaltungsanordnung SA, hier über die Ports P0, P1, und P2, möglich. Die Adressen werden dem EEPROM über die Anschlußklemmen P10 bis P17 sowie P20 bis P24 und die Multiplexereinrichtung MUX mitgeteilt. Die Daten für das EEPROM fließen über das 8-Bit-Port P0 und den 8-Bit-Buffer Bu 1 an die Eingangesklemmen I/O des EEPROM. Das Steuersignal zum Schreiben bzw. Programmieren muß an die Anschlußklemme P25, das zum Lesen und damit zum Kontrollieren an die Anschlußklemme P26 gelegt werden. An der Speichereinrichtung SE ist dann entweder W̅E̅, d. h. Schreiben, oder O̅E̅, d. h. Lesen, aktiv.

Damit sich das Bond-out-Chip BOC im Programmier- bzw. Kontrollmodus bezüglich der Anschlußklemmen P0, P1 und P2 passiv und damit hochohmig verhält, ist es darüberhinaus notwendig, diesen in den Reset-Zustand zu versetzen. Eine Bedingung (R̅E̅S̅E̅T̅ = "L") hierfür ist - wie aus der bisherigen Beschreibung hervorgeht - bereits erfüllt. Zusätzlich muß an die Klemme XTAL1 und XTAL2 ein Resonator, in vorteilhafter Weise ein Keramikschwinger, angeschlossen werden.

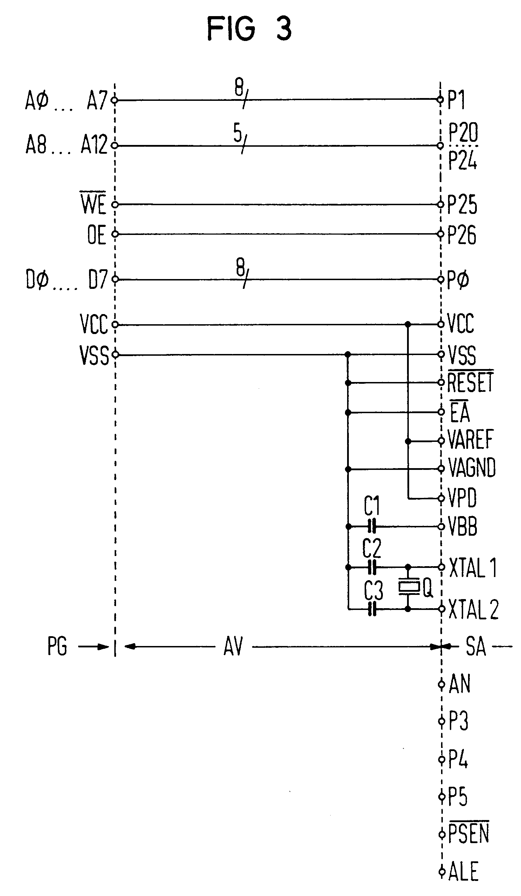

Eine zweckmäßige Einrichtung zur Programmierung bzw. Kontrolle der Speichereinrichtung SE besteht aus einem handelsüblichen Programmiergerät für den verwendeten Baustein der Speichereinrichtung SE und einer Adaptereinrichtung. Diese Adaptereinrichtung AV, wie sie z. B. in FIG 3 dargestellt ist, schafft einerseits die Verbindung zwischen den unterschiedlichen Anschlußkonfigurationen des Programmiergerätes PG und den Anschlußklemmen AK des nachzubildenden Mikrokontrollers und damit der vorgestellten Schaltungsanordnung SA. Andererseits werden mit der Adaptereinrichtung AV bestimmte Anschlußklemmen der erfindungsgemäßen Schaltungsanordnung SA auf feste Werte gelegt, insbesondere R̅E̅S̅E̅T̅ und E̅A̅ = "L" und andererseits der Resonator Q angeschlossen.

Die Adaptereinrichtung AV weist auf der Programmiergeräteseite Anschlußklemmen APG für die Adressen A0̸ bis A12, das Schreibsignal W̅E̅ sowie das Lesesignal O̅E̅ und Daten D0̸ bis D7 auf. Weiterhin ist an zwei Anschlußklemmen APG die Stromversorgung V_{CC} und V_{SS} anzuschließen.

Auf der Seite der erfindungsgemäßen Schaltungsanordnung SA sind die bereits erwähnten Anschlußklemmen AK angeordnet und mit den Anschlußklemmen APG in der in FIG 3 gezeigten Weise verbunden. die Anschlußklemmen AN, P3, P4, P5, P̅S̅E̅N̅ und ALE bleiben unbelegt. Zwischen die Klemmen XTAL1 und XTAL2 ist ein Resonator Q geschaltet. Weiterhin sind die Klemmen V_{BB}, XTAL1 und XTAL2 über Kapazitäten C1, C2, C3 mit der Klemme für Bezugspotential V_{SS} verbunden.

In vorteilhafter Weise kann die erfindungsgemäße Schaltungsanordnung derart ausgeführt werden, daß das Bond-out-Chip BOC und die Speichereinrichtung SE als Chip ohne Gehäuse auf einer Trägerplatte angeordnet werden und die zusätzliche Logikanordnung LA als kunden- oder halbkundenspezifische Schaltung, z. B. als Gate-Array-Schaltung, realisiert ist.

Dem Anwender steht mit der erfindungsgemäßen Schaltungsanordnung ein Mikrokontroller in "Quasi-EPROM-Version" zur Verfügung, der von außen kaum von einem maskenprogrammierten Mikrokontroller zu unterscheiden ist. Dieser nachgebildete Mikrokontroller weist jedoch einen umprogrammierbaren Speicher auf, der jederzeit vom Anwender änderbar ist. Durch das erfindungsgemäße Zusammenfügen der MOS-Technologie des Bond-out-Chips BOC und der EPROM-Technologie für die Speichereinrichtung wird auch die aufwendige Herstellung von Mikrokontrollern in EPROM-Version überflüssig. Die Logikanordnung LA ist überdies auf dem Bond-out-Chip BOC integrierbar.

### Bezugszeichenliste

- AK: Anschlußklemmen
- BOC: Bond-out-chip
- SE: Speichereinrichtung
- LA: Logikanordnung
- SA: Schaltungsanordnung zum Nachbilden des Mikrokontrollers
- AV: Adaptereinrichtung
- MC: Mikrokontroller
- AN: Anschlüsse des Piggy-back-Mikrokontrollers
- SO: Sockels des Piggy-back-Mikrokontrollers
- A: Klemmen für die Adreßleitungen des BOC
- A/D: Klemmen für die Adreß/Datenleitungen des BOC
- P̅S̅E̅N̅E̅: Klemme zur Freigabe der gespeicherten Programmdaten
- AKB: übrige Anschlüsse des BOC
- AK: Anschlußklemmen der Schaltungsanordnung
- P0...P5: bidirektionale 8-Bit-Ports
- AN: unidirektionales 8-Bit-Eingangsport
- R̅E̅S̅E̅T̅: Resetklemme
- XTAL1, 2: erster und zweiter Taktanschluß
- P̅S̅E̅N̅: Klemmen für Programmspeicherfreigabe
- ALE: weitere Klemme
- E̅A̅: Klemme für direkten Zugriff auf internes ROM
- V_{AREF}, V_{SS}, V_{BB}, V_{PD}, V_{AGND},: Referenz- und Versorgung
- V_{CC}: sspannungen
- MUX: Multiplexereinrichtung
- STE1: Steuereingang der Multiplexereinrichtung
- AB: Adreßanschlußklemmen der Speichereinrichtung
- E1: erste Eingangsklemmen der Multiplexereinrichtung
- E2: zweite Eingangsklemmen der Multiplexereinrichtung
- LATCH: Zwischenspeichereinrichtung
- STE2: Steuereingang der Zwischenspeichereinrichtung
- E3: Eingangsklemmen der Zwischenspeichereinrichtung
- BU1: erster 8-Bit-Buffer
- BU2: zweiter 8-Bit-Buffer
- BU3: dritter 8-Bit-Buffer
- STE3: Steuereingang des ersten Buffers
- STE4: Steuereingang des zweiten Buffers
- STE5: Steuereingang des dritten Buffers
- C̅E̅: Klemme für Baustein-Freigabe
- O̅E̅: Klemme für Auslese-Freigabe
- I/O: Klemme für Dateneingabe
- W̅E̅: Klemme für Schreib-Freigabe
- AA: Ausgangsklemmen der Multiplexereinrichtung
- G1, G2, G3, G4: ODER-Gatter
- PG: Programmiergerät
- Q: Resonator
- C1, C2, C3: Kapazitäten

## Patentansprüche

1. Schaltungsanordnung (SA) zum Nachbilden eines mit bestimmten Anschlußklemmen (AK) versehenen Mikrokontrollers, die das Bond-out-Chip (BOC) dieses Mikrokontrollers sowie eine damit in Verbindung stehende umprogrammierbare Speichereinrichtung (SE) beinhaltet,
**gekennzeichnet** durch eine zusätzlich enthaltene Logikanordnung (LA), durch die auf die umprogrammierbare Speichereinrichtung (SE) über mindestens einen Teil dieser Anschlußklemmen (AK) direkter Zugriff besteht, durch die Anschlußklemmen (AK) der Schaltungsanordnung (SA), die pinkompatibel zum nachzubildenden Mikrokontroller ausgeführt sind und einer räumlichen Abmessung der gesamten Schaltungsanordnung (SA), die gleich oder mindestens annähernd gleich der räumlichen Abmessung des nachzubildenden Mikrokontrollers ist.

2. Schaltungsanordnung nach Anspruch 1,
**dadurch gekennzeichnet,**
daß das Bond-out-Chip (BOC) in einen passiven Zustand versetzbar ist, während über die Logikanordnung (LA) der direkte Zugriff auf die umprogrammierbare Speichereinrichtung (SE) erfolgt.

3. Schaltungsanordnung nach Anspruch 1 oder 2,
**dadurch gekennzeichnet,**
daß während des direkten Zugriffs auf die umprogrammierbare Speichereinrichtung (SE) diejenige der Anschlußklemmen (AK), die beim Mikrokontroller den internen Zugriff auf eine interne Speichereinrichtung steuert, mit einem logischen Signal beaufschlagbar ist, welches dem Sperren des internen Zugriffs auf die interne Speichereinrichtung beim nachzubildenden Mikrokontroller entspricht.

4. Schaltungsanordnung nach einem der Ansprüche 1 bis 3,
**dadurch gekennzeichnet,**
daß eine Adaptervorrichtung (AV) zum direkten Zugriff auf die Speichereinrichtung (SE) an die Anschlußklemmen (AK) vorgesehen ist.

5. Schaltungsanordnung nach einem der Ansprüche 1 bis 4,
**dadurch gekennzeichnet,**
daß durch die Adaptereinrichtung (AV) die Logikanordnung (LA) zum direkten Zugriff auf die Speichereinrichtung (SE) aktivierbar ist.

6. Schaltungsanordnung nach einem der Ansprüche 1 bis 5,
**dadurch gekennzeichnet,**
daß der direkte Zugriff auf die Speichereinrichtung (SE) zum Zwecke des Programmierens durchführbar ist.

7. Schaltungsanordnung nach einem der Ansprüche 1 bis 5,
**dadurch gekennzeichnet,**
daß der direkte Zugriff auf die Speichereinrichtung (SE) zum Zwecke des Lesens der in der Speichereinrichtung (SE) gespeicherten Daten durchführbar ist.

8. Schaltungsanordnung nach einem der Ansprüche 1 bis 7,
**dadurch gekennzeichnet,**
daß das Bond-out-Chip (BOC) und/oder die umprogrammierbare Speichereinrichtung (SE) sowie die Logikanordnung (LA) ohne Gehäuse auf einer Trägerplatte montiert wird.

9. Schaltungsanordnung nach einem der Ansprüche 1 bis 8,
**dadurch gekennzeichnet,**
daß die Logikanordnung (LA) als kunden- oder halbkundenspezifische Schaltungsanordnung ausgebildet ist.

10. Schaltungsanordnung nach einem der Ansprüche 1 bis 9,
**dadurch gekennzeichnet,**
daß die umprogrammierbare Speichereinrichtung (SE) mindestens ein EPROM-Chip oder E²PROM-Chip ist.

11. Schaltungsanordnung nach einem der Ansprüche 1 bis 10,
**dadurch gekennzeichnet,**
daß die Anschlußklemmen (AK) der Schaltungsanordnung (SA) nach Art einer PLCC-Anschlußbelegung angeordnet sind.

12. Schaltungsanordnung nach einem der Ansprüche 1 bis 10,
**dadurch gekennzeichnet,**
daß die Anschlußklemmen (AK) der Schaltungsanordnung (SA) nach Art einer DIP-Anschlußbelegung angeordnet sind.

13. Schaltungsanordnung nach einem der Ansprüche 1 bis 12,
**dadurch gekennzeichnet,**
daß die Logikanordnung (LA) auf dem Bond-out-chip (BOC) integriert ist.

## Claims

1. Circuit arrangement (SA) for simulating a microcontroller which is provided with specific connecting terminals (AK) and contains the bond-out chip (BOC) of this microcontroller as well as a reprogrammable memory device (SE) which is connected thereto, characterized by an additionally contained logic arrangement (LA) by means of which direct access exists to the reprogrammable memory device (SE) via at least some of these connecting terminals (AK), by means of the connecting terminals (AK) of the circuit arrangement (SA) which are designed to be pin-compatible with the microcontroller to be simulated, and for simulating a spatial dimensioning of the entire circuit arrangement (SA), which is identical to or at least approximately identical to the spatial dimensioning of the microcontroller to be simulated.

2. Circuit arrangement according to Claim 1, characterized in that the bond-out chip (BOC) can be placed in a passive state while direct access to the reprogrammable memory device (SE) is effected via the logic arrangement (LA).

3. Circuit arrangement according to Claim 1 or 2, characterized in that, during the direct access to the reprogrammable memory device (SE), that one of the connecting terminals (AK) which in the case of the microcontroller controls the internal access to an internal memory device can have applied to it a logic signal which corresponds to blocking of the internal access to the internal memory device in the case of the microcontroller to be simulated.

4. Circuit arrangement according to one of Claims 1 to 3, characterized in that an adapter device (AV) is provided on the connecting terminals (AK) for direct access to the memory device (SE).

5. Circuit arrangement according to one of Claims 1 to 4, characterized in that the logic arrangement (LA) can be activated by means of the adapter device (AV) for direct access to the memory device (SE).

6. Circuit arrangement according to one of Claims 1 to 5, characterized in that the direct access to the memory device (SE) can be carried out for the purpose of programming.

7. Circuit arrangement according to one of Claims 1 to 5, characterized in that the direct access to the memory device (SE) can be carried out for the purpose of reading the data which are stored in the memory device (SE).

8. Circuit arrangement according to one of Claims 1 to 7, characterized in that the bond-out chip (BOC) and/or the reprogrammable memory device (SE) as well as the logic arrangement (LA) are mounted on a carrier board without a housing.

9. Circuit arrangement according to one of Claims 1 to 8, characterized in that the logic arrangement (LA) is constructed as a customer-specific or semi-customer-specific circuit arrangement.

10. Circuit arrangement according to one of Claims 1 to 9, characterized in that the reprogrammable memory device (SE) is at least an EPROM chip or an E²PROM chip.

11. Circuit arrangement according to one of Claims 1 to 10, characterized in that the connecting terminals (AK) of the circuit arrangement (SA) are arranged in the manner of a PLCC connection allocation.

12. Circuit arrangement according to one of Claims 1 to 10, characterized in that the connecting terminals (AK) of the circuit arrangement (SA) are arranged in the manner of a DIP connection allocation.

13. Circuit arrangement according to one of Claims 1 to 12, characterized in that the logic arrangement (LA) is integrated on the bond-out chip (BOC).

## Revendications

1. Montage (SA) pour simuler un microcontrôleur pourvu de bornes de raccordement déterminées (AK), et qui contient la microplaquette Bond-out-Chip (BOC) de ce microcontrôleur ainsi qu'un dispositif de mémoire reprogrammable (SE), qui est relié à cette microplaquette, caractérisé par un dispositif logique (LA) prévu en supplément et au moyen duquel un accès direct est possible au dispositif de mémoire reprogrammable (SE) par l'intermédiaire d'au moins une partie de ces bornes de raccordement (AK), et par le fait que les bornes de raccordement (AK) du montage (SA) sont réalisées de manière à être compatibles du point de vue des broches avec le microcontrôleur devant être simulé et que l'ensemble du montage (SA) possède des dimensions spatiales qui sont égales ou au moins approximativement égales aux dimensions spatiales du microcontrôleur à simuler.

2. Montage suivant la revendication 1, caractérisé par le fait que la microplaquette Bond-out-Chip (BOC) peut être placée dans un état passif, tandis que l'accès direct au dispositif de mémoire reprogrammable (SE) est réalisé par l'intermédiaire du dispositif logique (LA).

3. Montage suivant la revendication 1 ou 2, caractérisé par le fait que pendant l'accès direct au dispositif de mémoire reprogrammable (SE), celle des bornes de raccordement (AK), qui, dans le microcontrôleur, commande l'accès interne à un dispositif de mémoire interne, peut être chargée par un signal logique, qui, lors du blocage de l'accès interne, correspond au dispositif de mémoire interne dans le cas microcontrôleur à simuler.

4. Montage suivant l'une des revendications 1 à 3, caractérisé par le fait qu'il est prévu un circuit adaptateur (AV) pour l'accès direct au dispositif de mémoire (SE), au niveau des bornes de raccordement (AK).

5. Montage suivant l'une des revendications 1 à 4, caractérisé par le fait que le dispositif logique (LA) peut être activé par le dispositif adaptateur (AV) pour réaliser l'accès direct au dispositif de mémoire (SE).

6. Montage suivant l'une des revendications 1 à 5, caractérisé par le fait que l'accès direct au dispositif de mémoire (SE) peut être exécuté en vue de réaliser la programmation.

7. Montage suivant l'une des revendications 1 à 5, caractérisé par le fait que l'accès direct au dispositif de mémoire (SE) peut être exécuté pour la lecture des données mémorisées dans le dispositif de mémoire (SE).

8. Montage suivant l'une des revendications 1 à 7, caractérisé par le fait que la microplaquette Bond-out-Chip (BOC) et/ou le dispositif de mémoire reprogrammable (SE) ainsi que le dispositif logique (LA) sont montés sans boîtier sur une plaque de support.

9. Montage suivant l'une des revendications 1 à 8, caractérisé par le fait que le dispositif logique (LA) est réalisé sous la forme d'un montage spécifique au client ou semi-spécifique au client.

10. Montage suivant l'une des revendications 1 à 9, caractérisé par le fait que le dispositif reprogrammable (SE) est au moins une microplaquette EPROM ou une microplaquette E²PROM.

11. Montage suivant l'une des revendications 1 à 10, caractérisé par le fait que les bornes de raccordement (AK) du montage (SA) sont disposées conformément à un plan d'occupation de bornes PLCC.

12. Montage suivant l'une des revendications 1 à 10, caractérisé par le fait que les bornes de raccordement (AK) du montage (SA) sont disposées conformément à un système d'occupation de bornes BIP.

13. Montage suivant l'une des revendications 1 à 12, caractérisé par le fait que le dispositif logique (LA) est intégré sur la microplaquette Bond-out-chip (BOC).
